# EUROPEAN PATENT APPLICATION

(11) **EP 1 334 997 A1**
(43) Date of publication of application: **13.08.2003**
(21) Application number: 02002990.6
(22) Date of filing: 11.02.2002
(51) Int. Cl.: C08L 97/00, C08J 3/205

(54) **Method for the production of a compound material and compound material comprising lignin**

(71) Applicant: BORREGAARD INDUSTRIES LTD. BORREGAARD LIGNOTECH, N-1701 Sarpsborg (NO)
(72) Inventor: Joensson, Bengt A., 76135 Karlsruhe (DE); Rodsrud, Gudbrand, 1709 Sarpsborg (NO); Emilsson, Jan, 68152 Kristinehamn (SE)
(74) Representative: Wunderlich, Rainer, Dipl.-Ing.

(57) **Abstract**

This invention relates to a method for the production of a compound material comprising lignin and at least one additive. The compound material is generated by providing dissolved and/or dispersed lignin and by adding said additive to said lignin while the lignin being still in solution or dispersion. Afterwards the compound material is separated from the solution or the dispersion.

## Description

This invention relates to a method for the production of a compound material, in particular of a biodegradable or compostable compound material, according to the preamble of claim 1. Furthermore, this invention relates to a compound material according to the preamble of claim 15, which comprises lignin and at least one additive.

Methods for the production of a compound material comprising lignin and at least one additive as well as compound materials of this type are known in the prior art. In this contents the term "lignin" describes either pure lignin or derivatives thereof, for example alkali-lignin, ligninsulfonates, Kraft lignin, lignosulfonic acid, hydrolysis lignin, organosolv-lignin, acetosolv-lignin, milox-lignin, steam explosion lignin or other lignin derivatives.

In the following, the terms melting, melted or melt is used in accordance with practice in the plastic processing industry. It means that the viscosity of the material has been reduced sufficiently to process the material. It does not necessarily mean that crystalline matter actually have melted, but just that viscosity is reduced by any physical or chemical transformation of the material

In the known production methods lignin which was decomposed from biomass and isolated, is mixed with at least one additive or additional component and melted.

From EP-B-0 720 634, for example, a compound material comprising lignin and a protein derivative as well as a method for the production thereof are known. In the known compound material due to the combination of lignin and the protein derivative as additive the physical properties and characteristics of the compound material are highly improved.

In EP-A-0 687 711 a fiber compound material and a method for the production thereof are disclosed. For the production of the compound material natural fibers are added to melted lignin.

From WO 98/06785 it is known to melt lignin and to add to the melted lignin a protein which reacts with the lignin. Afterwards, at least one additive is added to the melt of lignin and protein wherein after the hardening the additive is bound in the lignin-protein-matrix.

All these known methods have in common that a dry and isolated lignin or a dry and isolated lignin derivative is used as initial substance and blended with additives. Afterwards the blend is melted. Due to the melting of the lignin the technical efforts during their production are high so that the production of these compound materials is expensive.

Furthermore, the physical properties, such as the E-module or the impact strength, are only slightly improved. If for example fibers are used as additive, there is only a low effect on the tensile strength and the E-module, because of a non-optimal contact and a non-optimal adhesion and/or cohesion between the fibers and the lignin-matrix. Also there are only minor effects, for example on impact strength, when an additive like an elastomer is used since also in this case there is only a non-optimal contact and adhesion between the elastomer and the lignin-matrix. Furthermore, there is only a non-homogeneous distribution and a low-degree of dispersion of the additive in the lignin-matrix. Additionally, these non-compound materials have a high melt viscosity and an unusual melt behavior so that they are not easy to handle.

As a result, there is a demand for compostable or biodegradable compound materials which are easy to produce, which can be composted after their use without polluting the environment, and which have mechanical properties comparable to those of synthetic compound materials.

It is an **object** of the present invention to provide a method for the production of a compound material comprising lignin and at least one additive as well as a compound material of this type, in which the physical properties of the compound material are further improved in a simple way.

This object is achieved by a method having the features of claim 1. Furthermore, this object is achieved by a compound material having the features of claim 15.

Usually lignin is decomposed from biomass, for example from wood, straw or comparable materials, by degrading the biomass. Also in this content the term "lignin" describes either pure lignin or lignin derivatives. The decomposing of the lignin can for example be carried out by dissolving said lignin bound in the biomass in a solvent, by hydrolysis of the biomass or by other known methods for decomposing lignin from biomass, for example enzymatic processes. The intermediate product is produced by dissolving and/or dispersing lignin in a solvent. According to the invention it is then proposed to add the additive or additional component to said lignin while said lignin is still dissolved and/or dispersed in said solvent. Afterwards, the lignin and the additive are together separated from the solvent as compound material.

Due to the blend of the additive with the still dissolved and/or dispersed lignin and the subsequent separation of the additive together with the lignin the additive is very homogeneously distributed in the compound material.

Thereby, the physical properties of the final compound material can be directly influenced and improved in a very early stage during the production of the compound material, since the additive is continuously distributed and suspended in the solvent during the formation of the compound material.

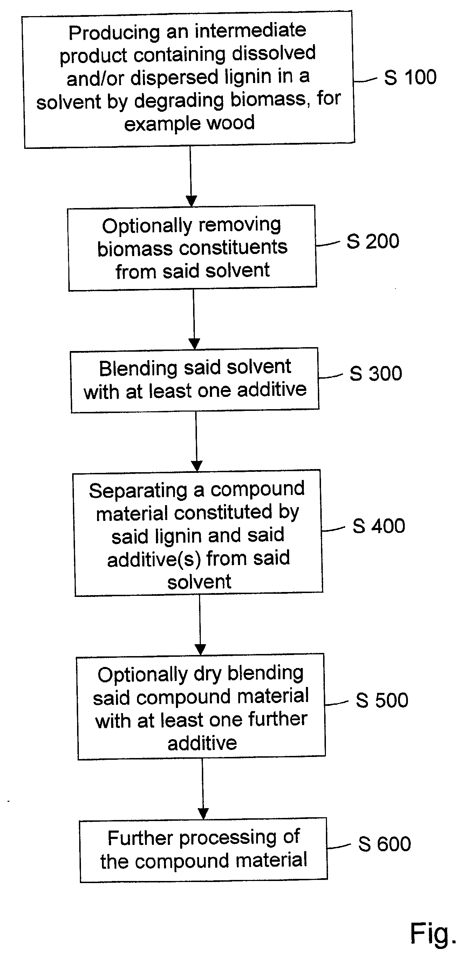

Further preferred embodiments of the invention can be taken from the following specification, the claims and the drawing.

Preferably, the intermediate product which contains said dissolved and/or dispersed lignin in a solvent is product during the degrading process of the biomass for the production of said lignin. Thereby, both, the production of the lignin and the production of the compound material, can be carried out at the same place and in the same production plant so that a transportation of the solvent or the lignin is not necessary anymore.

Alternatively, it is also possible to constitute the intermediate product by dissolving or dispersing lignin, which has already been precipitated or dried, in a solvent.

Furthermore, it is proposed to add additional precipitated or dried lignin to the intermediate product, which already contains dissolved and/or dispersed lignin in a solvent, in order to set the lignin-concentration in the solvent to a predetermined value.

Lignin is very often decomposed during the cellulose processing of the paper production. For this purpose the lignin contained in the cellulose of the biomass is dissolved in the solvent. The resulting solvent contains dissolved lignin and further biomass constituents, for example hemicellulose, cellulose and/or sugar.

In a preferred embodiment of practicing the method according to the invention it is therefore proposed to separate these biomass constituents contained in the solvent before the additive is added for the production of the compound material to the solvent. As a consequence, two different agents can be produced in on process. On the one hand, the cellulose separated from the biomass can be used for the paper production while, on the other hand, lignin dissolved in the solvent can be used for the production of the compound materials.

If, however, the compound material to be produced shall also contain biomass constituents, for example cellulose fibers, in order to strengthen the structure of the compound material, it is also possible to separate only a part of the biomass constituent from the solvent so that a predetermined amount of the biomass constituent remains in the solvent. Afterwards, the additive is added to the solvent containing lignin and biomass constituents so that a compound material also comprising biomass constituents can be produced.

When said lignin received after the degrading of the biomass is dissolved and/or dispersed in said solvent it is preferred to use an additive which is soluble or dispersable in said solvent. By using a soluble or dispersable additive a very homogenous distribution of the additive with respect to the lignin dissolved and/or dispersed in the solvent can be achieved.

Furthermore, it is proposed to use a polymeric elastomer as additive, whereby a component material can be produced which has an above average dispersability.

Additionally, it is proposed to use as additive a colloidal dispersion of polymers in a hydrous agent. This colloidal dispersion, e.g. latex, can contain different types of synthetic or natural polymers, polychloroprenes, styrine butadiene copolymers, natural rubber or synthetic rubber. When adding such a dispersion to the dissolved and/or dispersed lignin the lignin and the polymers contained in the dispersion will co-precipitate whereby a compound material results which can easier be processed, has a higher machineability and superior mechanical properties compared to known compound materials comprising lignin and comparable polymers.

In a still further embodiment of practicing the method according to the invention celluloseacetates, polycarbonates, shellac and/or other natural resins are added to the dissolved and/or dispersed lignin as additive wherein also in this embodiment the respective additive added to the decomposed lignin is embedded into the lignin-matrix during the precipitation or conversion of the lignin from soluble form to powder. Thereby desired properties of the compound material can be adapted for example a high tensile strength or a thermal non-deformability in a comparable high temperature range of, for example, 150 to 180°C.

By using additives by means of which lignin ethers are obtained, so that hydroxyethylated, hydroxypropylated or hydroxybutyrated lignin derivatives result, compound materials can be produced which are more compatible to react with thermoplastic blend components when the compound material is used in thermoplastic materials. A copolymerization with polyethylenglycol results in less rigid products since the polyethylenglycol acts as soft segment in the compound material.

In another embodiment of practicing the method according to the invention it is suggested to use natural fibers and/or synthetic fibers and/or inorganic fibers as additives which are added to the decomposed lignin. The use of fibers has the advantage that in particular the mechanical properties of the object formed from the compound material can be increased since the fibers are able to resist loads acting on the object. Preferably, short single fibers are used since they show a very homogeneous distribution in the compound material. If fiber bundles are supplied to the solvent, it is proposed to additionally treat them mechanically so that the fibers are homogeneously dispersed in the solvent.

If natural fibers, for example coir, flax, hemp, or other bast fibers, are used for the compound material the compound material becomes compostable or biodegradable so that a recycling of products produced by the compostable compound material is not necessary anymore. This is in particular interesting for the production of parts used in the interior of cars, airplanes and the like.

Furthermore, it is possible to use synthetic fibers as additives which are particularly characterized by superior mechanical properties. As synthetic fibers, fibers can be used which are made of polymers, for example polyamide, polytetrafluorethylene, aramide, polyester, polyvinyl chloride, polyvinylidene chloride, polyethylenes and the like. Also inorganic fibers like glass fibers or carbon fibers can be used as additive.

Furthermore, it is proposed to add a further additive to the compound material, after the compound material has been separated from the solvent. For example, softeners, plastilizers, natural fibers, synthetic or inorganic fibers, or the like, can be added to the compound material, wherein for the addition of the further additive the compound material can, for example, be melted or can be dissolved in another solvent.

Depending from the polymerization of the lignin in the compound material the compound material can be separated from the solvent for example by filtering, decantation, evaporation, spray drying or vacuum drying.

If, however, the compound material is also dissolved in the solvent, it is also possible to precipitate the compound material from the solvent. For this purpose, a precipitating agent, for example sulfuric acid or carbondioxide, can be supplied to the solvent after a predetermined time after the additive has been added to the solvent.

According to another aspect of the present invention, the invention relates to a compound material comprising lignin and at least one additive, wherein the compound material has been constituted by blending said additive with said lignin, while said lignin was dissolved and/or dispersed in a solvent, and by separating the compound material from the solvent containing said lignin and said additive.

In a preferred embodiment of this compound material said lignin is selected from a group comprising alkali-lignin, Kraft lignin, ligninsulfonates, lignosulfonic acid, organosolv-lignin, acetosolv-lignin, hydrolysis lignin, milox-lignin or steam explosion lignin. These are the main lignin derivatives which are used as initial substance for the constitution of the compound material.

Additionally, in order to provide compound materials having advantageous mechanical properties, for example a comparable high tensile strength, it is additionally proposed that the compound material comprises natural fibers, for example coir, hemp etc., and/or synthetic fibers, for example polyamide fibers, polyvinylchloride fibers, and/or inorganic fibers, for example glass fibers and carbon fibers.

In another preferred embodiment of the compound material according to the invention the compound material contains one or a combination of polymeric elastomers from a group comprising polychloroprenes, styrene butadiene copolymers, natural rubber and synthetic rubber. If the compound material has been constituted by adding one of the aforesaid additives to the decomposed lignin the added polymere co-precipitates with the decomposed lignin.

Thereby a compound material is constituted which has improved mechanical properties compared to compound material comprising lignin and a comparable polymer which has been produced by using a method known in the prior art.

Preferably, the compound material is a thermoplastic compound material so that the compound material can be heated and deformed into each desired shapes. Such a thermoplastic compound material can for example be used for the production of interior parts for cars and airplanes.

In the following a preferred embodiment of practicing the method according to the invention will be explained in detail with reference to the accompanying drawing. Therein the only Figure shows a flow-chart of an embodiment according to the invention of practicing a method for the production of a compound material.

At the beginning in step S 100 an intermediate product containing dissolved and/or dispersed lignin in a solvent is decomposed by degrading biomass. The produced lignin may be any lignin from ligninosulfonates from sulfide pulping, Kraft lignin from Kraft pulping, alkali-lignins from alkali pulping, other lignins from other pulping processes, hydrolysis lignin from hydrolysis of biomass or dissolved waste produced from sugar production or other agricultural waste products.

Alternatively, it is also possible in step 100 to constitute the intermediate product by dissolving or dispersing lignin, which has already been precipitated or dried, in a solvent.

In step S 200 biomass constituents, like hemicellulose, cellulose, sugar or the like, can optionally be removed. In a preferred embodiment according to the invention it is proposed, that a predetermined amount of such biomass constituents, for example cellulose, is left in the solvent whereby the structure of the compound material to be produced can be strengthened.

In step S 300 at least one additive is blended with the lignin dissolved and/or dispersed in the solvent. For example, synthetic aramide fibers can be used as additive which are supplied to the solvent. Additionally, further additives, for example softeners or the like, can also be supplied to the solvent if necessary.

After a predetermined period of time the lignin derivative contained in the solvent starts to precipitate wherein the aramide fibers are evenly distributed in the precipitating lignin whereby the compound material is generated.

In order to accelerate and/or to start the precipitation a precipitating agent, for example carbondioxide, can be supplied to the solvent, so that the compound material can be removed from the solvent for example by filtering. The resulting compound material may afterwards be dried, so that the compound material can be provided in powder form. Spray drying or vacuum drying may also be processes for conversion of the soluble lignin compound to powder form.

In step S 500 it is further proposed to optionally dry blend said compound material with at least one further additive.

The compound material produced by the method according to the invention shown in the figure is a thermoplastic material which can be heated and formed into desired shapes, as it is proposed in the figure as further step S 600. Such a thermoplastic compound material can for example be used for the production of interior parts for cars.

When using natural fibers like core, flax fibers or hemp fibers instead of synthetic fibers the products produced with the compound material are compostable so that an expensive recycling of the products is not necessary anymore.

## Claims

1. A method for the production of a compound material, in particular of a biodegradable or compostable compound material, comprising lignin and at least one additive wherein for the production of the compound material:
- an intermediate product containing dissolved and/or dispersed lignin in a solvent is produced, and
- said at least one additive is blended with said lignin for
the production of said compound material,
**characterized in that**
- said at least one additive is blended with said lignin while said lignin is dissolved and/or dispersed in said solvent, and
- said compound material is separated from said solvent after the blend of said additive with said lignin.

2. The method according to claim 1,
characterizedin that
said intermediate product is decomposed by degrading biomass for the production of said lignin, wherein said lignin is dissolved and/or dispersed in the solvent.

3. The method according to claim 1 or 2,
**characterized in that**
additional precipitated or dried lignin is add to the solvent before said additive is added to the solvent.

4. The method according to claim 1, 2 or 3,
**characterized in that**
said intermediate product contains at least one further biomass constituent in the solvent.

5. The method according to claim 4,
**characterized in that**
said further biomass constituent is separated from said solvent before said additive is blended with said dissolved and/or dispersed lignin.

6. The method according to claim 5,
**characterized in that**
a defined predetermined amount of said further biomass constituent is left in the solvent, and
the additive is blended with said dissolved and/or dispersed lignin and the left biomass constituent.

7. The method according to any one of the claims 1 to 6,
**characterized in that**
said additive is soluble and/or dispersable in said solvent.

8. The method according to any one of the claim 1 to 7,
**characterized in that**
a polymeric elastomer is used as additive.

9. The method according to any one of the preceding claims,
**characterized in that**
a colloidal dispersion of polymers in a hydrous agent is blended as additive with the dissolved and/or dispersed lignin.

10. The method according to any one of the preceding claims,
**characterized in that**
natural resins, celluloseacetates, polycarbonates and/or shellac is blended as additive, with the dissolved and/or dispersed lignin.

11. The method according to any one of the preceding claims,
**characterized in that**
natural fibers and/or synthetic fibers and/or inorganic fibers are added to the decomposed lignin as additive.

12. The method according to any one of the preceding claims,
**characterized in that**
said compound material is separated by evaporation, spray drying, vacuum drying, precipitation decanting and/or filtration from the solvent.

13. The method according to any one of the preceding claims,
**characterized in that**
said separated compound material is converted into powder form.

14. The method according to any one of the preceding claims,
**characterized in that**
at least one further additive is blended with the compound material, after the compound material has been separated from the solvent, wherein the compound material is preferably dried.

15. A compound material comprising lignin and at least one additive, wherein said lignin has been degraded from biomass,
**characterized in that**
said compound material has been constituted by blending said additive with said lignin, while said lignin was dissolved and/or dispersed in a solvent, and by separating the compound material from said solvent containing said lignin and said additive.

16. The compound material according to claim 15,
**characterized in that**
said lignin is selected from a group comprising alkali-lignin, Kraft lignin, ligninsulfonates, lignosulfonic acid, organosolv-lignin, acetosolv-lignin, hydrolysis lignin milox-lignin and steam explosion lignin.

17. The compound material according to claim 15 or 16,
**characterized in that**
said additive comprises natural fibers and/or synthetic fibers and/or inorganic fibers.

18. The compound material according to claim 15, 16 or 17,
**characterized in that**
said additive is a polymeric elastomer from a group comprising polychloroprenes, styrene butadiene copolymers, natural rubber and synthetic rubber.

19. The compound material according to any of the claims 15 to
18,
**characterized in that**
said compound material is a thermoplastic compound material.
